# EUROPÄISCHE PATENTSCHRIFT

(11) **EP 2 655 027 B1**
(45) Veröffentlichungstag und Bekanntmachung des Hinweises auf die Patenterteilung: **30.07.2014**
(21) Anmeldenummer: 10805212.7
(22) Anmeldetag: 23.12.2010
(51) Int. Cl.: B27N 3/00, B27N 3/14, B27N 1/02

(54) **VORRICHTUNG UND VERFAHREN ZUM WINDSICHTEN UND BELEIMEN VON HOLZSPÄNEN**
DEVICE AND METHOD FOR ELUTRIATING AND GLUING WOOD CHIPS
DISPOSITIF ET PROCÉDÉ POUR LE CLASSEMENT PNEUMATIQUE ET L'ENCOLLAGE DE COPEAUX DE BOIS

(43) Veröffentlichungstag der Anmeldung: 30.10.2013
(73) Patentinhaber: Kronoplus Technical AG, 9052 Niederteufen (CH)
(72) Erfinder: SPEIDEL, Hannes, CH-8413 Neftenbach (CH)
(86) Internationale Anmeldenummer: PCT/EP2010/007906
(87) Internationale Veröffentlichungsnummer: WO 2012/083994

(56) Entgegenhaltungen:
- DE-A1- 19 835 419
- DE-A1-102004 033 777
- DE-A1-102007 049 948
- DE-B3-102006 040 044
- DE-B3-102006 058 625
- US-A1- 2009 211 692

## Beschreibung

Die Erfindung betrifft eine Vorrichtung gemäß Anspruch 1 und ein Verfahren gemäß Anspruch 9 zum Windsichten und Beleimen von Holzspänen.

Spanplatten aus Holz oder vergleichbaren lignozellulosehaltigen Materialien, insbesondere Flachpressplatten, werden vorzugsweise als Mehrschichtplatten mit einer mechanisch stabilisierenden Mittelschicht aus vergleichsweise groben Spänen sowie oberen und unteren Deckschichten aus vergleichsweise feinen Spänen hergestellt. Die Späne liegen hierbei im Gegensatz zu den in Faserplatten, wie beispielsweise MDF-Platten, verwendeten feineren Holzfasern in einer vergleichsweise breiten Größenstreuung vor.

Es besteht dann bei einer gemeinsamen Beleimung grober und feiner Späne das Problem, dass feine Späne aufgrund ihrer größeren spezifischen Oberfläche tendenziell mehr Leim aufnimmt als benötigt, grobe Späne dagegen zu wenig. Dies verursacht in der gepressten Mehrschichtplatte eine unerwünschte ungleichmäßige Verteilung der Leimmenge. Außerdem wäre eine Reduzierung der dabei eingesetzten Leimmenge aus Gründen der Wirtschaftlichkeit wünschenswert.

Alternativ zur gemeinsamen Beleimung beschreibt die DE 10 2004 033 777 A1 ein Verfahren, bei dem ein Strom aus groben Faseranteilen und ein Strom aus feinen Faseranteilen zuerst getrennt beleimt, dann in einem definierten Mischungsverhältnis zusammengeführt und schließlich zu einer flächigen Matte ausgestreut wird. Je nach dem eingestellten Mischungsverhältnis lassen sich Mittel- und Deckschichten von Spanplatten, beispielsweise von orientiert gestreuten Spanplatten (OSB), aufeinanderschichten. Nachteilig hierbei ist, dass für die Beleimung der einzelnen Spanfraktionen getrennte Beleimungseinrichtungen vorzusehen sind, ebenso Vorrichtungen zur Sichtung der zugeführten und der fertig beleimten Späne. DE 10 2007 049 948 beschreibt, dass das Streugut in seiner Größe in Teilen separiert auf das Formband gestreut wird.

Es besteht daher Bedarf für eine Vorrichtung und ein Verfahren zum Bereitstellen beleimter Holzspanfraktionen mit unterschiedlicher Spangröße, die hinsichtlich der oben genannten Probleme verbessert sind.

Die gestellte Aufgabe wird gelöst mit einer Vorrichtung zum Windsichten und Beleimen von Holzspänen gemäß Anspruch 1. Demnach umfasst die erfindungsgemäße Vorrichtung eine Windsichteinrichtung zum Fraktionieren der Holzspäne in wenigstens eine grobe und eine feine Spanfraktion, wobei die Windsichteinrichtung wenigstens einen Fallschacht umfasst und derart ausgebildet ist, dass die grobe und die feine Spanfraktion durch unterschiedliche Beleimungsbereiche fallen. Ferner ist eine Beleimungseinrichtung zum Beleimen der groben und der feinen Spanfraktion in den Beleimungsbereichen vorgesehen. Die grobe Spanfraktion hat hierbei insbesondere eine größere mittlere Spangröße als die feine Spanfraktion. Die Beleimungsbereiche sind insbesondere im Bereich des Fallschachts ausgebildet.

Unterschiedliche Beleimungsbereiche ergeben sich in dem Fallschacht beispielsweise dadurch, dass die Spanfraktionen unterschiedlicher Spangröße beim Windsichten zuerst unterschiedlich weit seitlich abgelenkt werden, so dass sie in einer anschließenden Phase des Herabfallens als räumlich voneinander getrennte Spanfraktionen vorliegen. Mit der Beleimungseinrichtung können dann in den Beleimungsbereichen unterschiedliche Bedingungen für das Beleimen hergestellt werden, um die Leimaufnahme der einzelnen Spanfraktionen an ein gewünschtes Maß anzupassen. Es ist somit möglich, das Sichten und Beleimen in einer gemeinsamen Vorrichtung für mindestens zwei unterschiedlich feine Spanfraktionen gemeinsam durchzuführen und die Leimmengen für Mittel- und Deckschichten einer Pressspanplatte getrennt einzustellen.

Vorzugsweise ist die Beleimungseinrichtung ausgebildet, in die Beleimungsbereiche wenigstens ein Leimaerosol derart einzubringen, dass entlang wenigstens einer von der groben Spanfraktion durchlaufenen Sichtungsbahn eine andere Leimmenge bereit gestellt wird, insbesondere eine größere Leimmenge, als entlang wenigstens einer von der feinen Spanfraktion durchlaufenen Sichtungsbahn. Die Sichtungsbahn ist hierbei die Flugbahn der jeweiligen Spanpartikel beim Sichten, beispielsweise zusammengesetzt aus einer Phase der Partikelablenkung und einer anschließenden Phase des Herabfallens der Partikel. Unter Leimmenge ist eine unverdünnte Leimmenge zu verstehen, mit der ein Partikel einer Einheitsgröße auf seinem Weg durch den jeweiligen Beleimungsbereich, also entlang seiner Sichtungsbahn, in Kontakt kommen würde. Die Leimmenge ist somit insbesondere von der Leimdichte entlang der Sichtungsbahn und der Länge der Sichtungsbahn innerhalb des Beleimungsbereichs abhängig.

Bei einer besonders günstigen Ausführungsform ist die Beleimungseinrichtung ausgebildet, in die Beleimungsbereiche wenigstens ein Leimaerosol derart einzubringen, dass sich eine mittlere Leimdichte in den Beleimungsbereichen voneinander unterscheidet. Unter Leimdichte ist hierbei das Gewicht oder das Volumen des Leims pro Volumeneinheit der Beleimungsbereiche zu verstehen. Bei Leimaerosolen ließen sich unterschiedliche Leimdichten durch Einbringen unterschiedlicher Leimvolumenströme herstellen, beispielsweise aus unterschiedlich dicht gestaffelten Sprühdüsen oder dergleichen, und/oder mit unterschiedlich großen Leimtropfen. Möglich wäre auch das Vernebeln unterschiedlich stark konzentrierten oder verdünnten Leims. Dadurch lässt sich die von den Spanfraktionen jeweils aufgenommene Leimmenge auf einfache Weise in den Beleimungsbereichen einstellen.

Beispielsweise könnten in die Beleimungsbereiche Leimaerosole mit umso größerer mittlerer Leimdichte eingebracht werden, je größer die mittlere Spangröße der dem Beleimungsbereich zugeordneten Spanfraktion ist. Dadurch ließe sich insbesondere vermeiden, dass feine Spanfraktionen mit vergleichsweise großer spezifischer Oberfläche zu viel Leim aufnehmen und grobe Spanfraktionen mit vergleichsweise kleiner spezifischer Oberfläche zu wenig Leim. Dadurch kann die für die Herstellung von Spanplatten insgesamt benötigte Leimmenge reduziert und die Wirtschaftlichkeit erhöht werden. Ferner ist eine homogene Leimverteilung in den einzelnen Spanfraktionen und im Verhältnis der einzelnen Spanfraktionen zueinander möglich.

Vorzugsweise umfasst die Windsichteinrichtung wenigstens eine Blaseinrichtung zum Erzeugen einer schräg nach oben gerichteten Ablenkströmung, deren Hauptströmungsrichtung mit der Horizontalen insbesondere einen Winkel von 30 bis 60° einschließt. Dadurch können die Spanfraktionen im Wesentlichen dem Verlauf einer Wurfparabel folgend in dem nachfolgenden Fallschacht getrennt werden, wodurch sich unterschiedliche Beleimungsbereiche auf besonders einfache Weise bereitstellen lassen. Mit Hauptströmungsrichtungen von 30 bis 60° lässt sich eine besonders kompakte Bauweise realisieren, da sich die Flugbahnen grober und feiner Partikel in diesem Winkelbereich besonders stark unterscheiden und eine besonders effektive Trennung ermöglichen. Außerdem lassen sich Spanfraktionen, die nicht beleimt werden sollen, besonders effektiv von den zu beleimenden Spanfraktionen trennen.

Bei einer besonders günstigen Ausgestaltung der erfindungsgemäßen Vorrichtung ist an der Windsichteinrichtung stromaufwärts von den Beleimungsbereichen eine Auffangvorrichtung für Fremdkörper vorgesehen, deren Dichte größer ist als die Dichte der zugeführten Späne, und/oder eine Auffangvorrichtung für eine nicht zu beleimende Spanfraktion, die gröber ist als die zu beleimenden Spanfraktionen, und/oder eine Auffangvorrichtung für eine nicht zu beleimende Spanfraktion, die feiner ist als die zu beleimenden Spanfraktionen. Dadurch lassen sich Verunreinigungen der Holzspäne, wie beispielsweise Sand, Steine oder Metallteile, ausleiten und in einem unbeleimten Zustand besonders einfach entsorgen. Außerdem können besonders leichte Spanfraktionen, wie beispielsweise Holzstaub, vor dem Beleimen ausgeleitet und einer Weiterverwertung, beispielsweise zur Gewinnung von Energie und/oder Thermoöl, zugeführt werden. Dies ermöglicht eine erhebliche Ressourcenschonung und/oder eine verbesserte Verwertung der Späne. Ferner können zu grobe Spanfraktionen für eine spätere Wiederverwertung, beispielsweise durch Zerkleinerung und Rückführung in den Produktstrom, in unbeleimtem Zustand ausgeleitet werden. Dies erleichtert die Handhabung und spätere Verwertung der ausgeleiteten Fraktionen. Außerdem kann vermieden werden, dass für anderweitig zu verwertende Spanfraktionen unnötigerweise Leim verbraucht wird.

Eine besonders günstige Ausführungsform umfasst ferner wenigstens eine Auffangvorrichtung zum getrennten Auffangen der beleimten Spanfraktionen. Dadurch können die beim Windsichten getrennten Spanfraktionen auf einfache Weise für eine Weiterverarbeitung bereitgestellt werden. Dadurch werden zusätzliche Einrichtungen zur Sichtung der Späne entbehrlich.

Eine besonders günstige Ausführungsform der Erfindung umfasst ferner wenigstens eine weitere Blaseinrichtung zum Erzeugen einer Schutzströmung entlang wenigstens einer Seitenwand des Fallschachts, um die beleimten Spanfraktionen und/oder die Leimaerosole von der Seitenwand weg zu lenken. Dadurch lässt sich eine Kontamination der erfindungsgemäßen Vorrichtung mit Leim vermeiden oder zumindest reduzieren. Außerdem lässt sich der Kontakt der abrasiv wirkenden Holzspäne mit der erfindungsgemäßen Vorrichtung vermeiden oder zumindest reduzieren. Anders gesagt, erfolgt das Sichten und Beleimen der Spanfraktionen im Wesentlichen ohne die Berührung von Maschinenteilen, so dass diese möglichst wenig mit Leim und/oder Späne belastet werden. Dadurch lassen sich der Verschleiß der erfindungsgemäßen Vorrichtung sowie der Bedarf für deren Reinigung mit der Folge eines zwischenzeitlichen Produktionsstillstands verringern.

Vorzugsweise umfasst die Auffangvorrichtung wenigstens ein Förderband derart, dass wenigstens die grobe und die feine Spanfraktion in Förderrichtung des Förderbands nacheinander auf das Förderband fallen und von diesem übereinander geschichtet zur Weiterverarbeitung bereitgestellt werden. Dadurch wird eine zusätzliche Vorrichtung zum Schichten der Spanfraktionen entbehrlich. Folglich lassen sich Mehrschichtspannplatten mit besonders geringem Platzbedarf herstellen.

Die gestellte Aufgabe wird ferner gelöst mit einem Verfahren nach Anspruch 9. Demnach werden die Holzspäne durch Windsichten in wenigstens zwei Spanfraktionen unterschiedlicher mittlerer Spangröße getrennt, und die Spanfraktionen werden beim Windsichten beleimt. Somit lassen sich die Spanfraktionen ohne Berührung empfindlicher Maschinenteile in einer gemeinsamen Behandlungseinheit trennen und beleimen. Dafür eignet sich insbesondere eine das Windsichten abschließende Phase des Herabfallens der Spanfraktionen. Dadurch, dass die grobe und die feine Spanfraktion beim oder nach dem Windsichten in getrennten Bereichen vorliegen, lässt sich die Beleimung der jeweiligen Spanfraktion besonders einfach an deren mittlere Partikelgröße und/oder die mittlere Partikeloberfläche anpassen.

Vorzugsweise werden die Spanfraktionen mit Leimaerosolen unterschiedlicher Leimdichte beleimt, wobei die Spanfraktionen insbesondere mit umso größerer Leimdichte beleimt werden, je gröber die Spanfraktion ist. Unter Leimaerosolen unterschiedlicher Leimdichte ist eine Verteilung des Leims in Form von Leimaerosolen mit unterschiedlicher Leimmenge pro Volumeneinheit der Beleimungsbereiche zu verstehen. Das heißt, der Leim könnte in Form unterschiedlich großer Leimtropfen, einer unterschiedlichen Anzahl von Leimtropfen und/oder Aerosolen mit unterschiedlicher Leimkonzentration bereitgestellt werden.

Bei einer besonders günstigen Ausgestaltung werden die Spanfraktionen durch Zerstäuben unterschiedlich stark verdünnten Leims unterschiedlich dicht beleimt. Auf diese Weise lassen sich unterschiedliche Leimdichten besonders einfach und flexibel herstellen. Beispielsweise könnten Leimkonzentrationen laufend an jeweils vorliegende Spanfraktionen angepasst werden.

Vorzugsweise werden die Spanfraktionen durch Einleiten einer schräg nach oben gerichteten Ablenkströmung unterschiedlich weit in seitlicher Richtung abgelenkt und während einer Phase des Herabfallens, insbesondere in einem Bereich unterhalb der Ablenkströmung, beleimt. Dadurch lässt sich auf einfache Weise, im Wesentlichen dem Verlauf einer Wurfparabel folgend, eine Trennung der unterschiedlich feinen Spanfraktionen erzielen, um die Spanfraktionen getrennt voneinander zu beleimen und aufzusammeln.

Vorzugsweise wird beim Windsichten wenigstens eine weitere, nicht zu beleimende Spanfraktion vor dem Beleimen abgetrennt. Dadurch lässt sich die Qualität der zu beleimenden Spanfraktionen erhöhen und gewährleisten, dass nicht zu Spanplatten zu verarbeitende Spanfraktionen ohne Beleimung einer Weiterverwertung zugeführt werden können. Außerdem kann insbesondere eine für eine Verwendung in Spanplatten zu grobe Spanfraktion in einem nicht beleimten Zustand einer Zerkleinerung zugeführt und wieder in den Produktstrom, insbesondere zur Beleimung, zurückgeführt werden. Dadurch lassen sich die Spanfraktionen ressourcenschonend einer jeweils optimalen Verwendung zuführen und die insgesamt eingesetzte Leimmenge reduzieren.

Vorzugsweise umfassen die Spanfraktionen wenigstens eine grobe Spanfraktion zur Herstellung einer Mittelschicht und eine feine Spanfraktion zur Herstellung wenigstens einer Deckschicht einer Pressspannplatte. Bei derartigen Spanfraktionen lässt sich das erfindungsgemäße Verfahren besonders effizient einsetzen. Insbesondere lassen sich die Vorteile einer Platz sparenden Sichtung und Beleimung der Holzspäne und einer Anpassung der auf die jeweiligen Spanfraktionen aufgebrachten Leimmengen besonders effizient kombinieren.

Die gestellte Aufgabe wird ferner gelöst mit einem Herstellungsverfahren für eine Pressspannplatte, das das erfindungsgemäße Verfahren umfasst sowie einen Schritt zum Übereinanderschichten wenigstens einer unteren Deckschicht, der Mittelschicht und einer oberen Deckschicht, sowie einen Schritt zum Zusammenpressen der Deckschichten und der Mittelschicht. Somit lassen sich Pressspannplatten mit besonders hoher Qualität besonders kostengünstig und ressourcenschonend herstellen.

Bevorzugte Ausführungsformen der Erfindung sind in der Zeichnung dargestellt. Es zeigen:
- Fig. 1: einen schematischen Querschnitt durch eine erste Ausführungsform der erfindungsgemäßen Vorrichtung; und
- Fig. 2: einen schematischen Querschnitt durch eine zweite Ausführungsform der erfindungsgemäßen Vorrichtung.

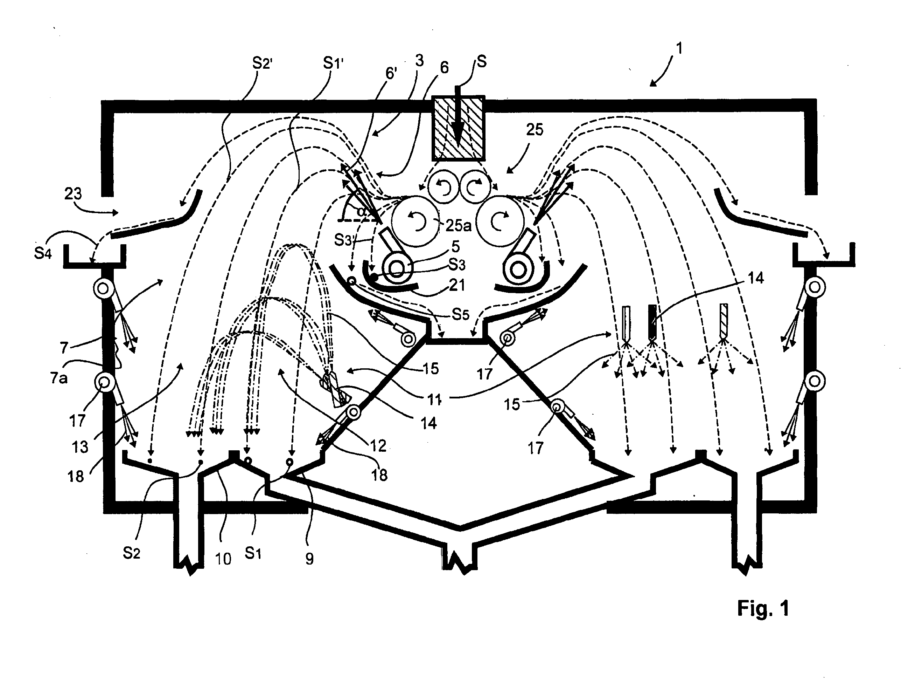

Wie die Fig. 1 erkennen lässt, umfasst eine erste Ausführungsform 1 der erfindungsgemäßen Vorrichtung zum Windsichten und Beleimen von Holzspänen S oder dergleichen eine Windsichteinrichtung 3 zum Fraktionieren der Holzspäne S in wenigstens zwei zu beleimende Spanfraktionen S1 und S2 unterschiedlicher mittlerer Spangröße.

Die Windsichteinrichtung 3 umfasst eine Blaseinrichtung 5, die einen schräg nach oben gerichteten Ablenkluftstrom 6 zum seitlichen Ablenken der Holzspäne S erzeugt, sowie einen Fallschacht 7, in dem die abgelenkten Partikel je nach Spangröße vorzugsweise unterschiedlichen Wurfparabeln folgend nach unten fallen können, um die gröbere Spanfraktion S1 von der feineren Spanfraktion S2 räumlich zu trennen. Die im Wesentlichen nebeneinander entlang zugeordneter Sichtungsbahnen S1', S2' herab fallenden Spanfraktionen S1, S2 werden von einer ersten Auffangvorrichtungen 9 für grobe Späne und einer zweiten Auffangvorrichtung 10 für feine Späne getrennt für die Weiterverarbeitung gesammelt.

Die erfindungsgemäße Vorrichtung 1 umfasst ferner im Bereich des Fallschachts 7 eine Beleimungseinrichtung 11 mit Zerstäubungseinrichtungen 14 zum Erzeugen wenigstens eines Leimaerosols 15, üblicherweise auch Spray genannt, durch das die zu beleimenden Spanfraktionen S1, S2 fallen. Die Zerstäubungseinrichtungen 14 können beispielsweise Sprühdüsen sein, wie Hochdruckdüsen oder Ultraschalldüsen, und/oder Rotationszerstäuber, deren prinzipielle Funktionsweise jeweils bekannt ist und deshalb nicht weiter beschrieben wird. Ebenso könnte zum Zwecke der Zerstäubung oder Vernebelung in den Zerstäubungseinrichtungen 14 zusätzlich Dampf beigemischt werden, um eine gewünschte Aerosolqualität zu erzielen:

Die Beleimungseinrichtung 11 ist derart ausgebildet, dass in den Spanfraktionen S1, S2 zugeordneten Beleimungsbereichen 12, 13 innerhalb des Fallschachts 7 wenigstens ein Leimaerosol 15 mit örtlich unterschiedlicher Leimdichte und/oder über unterschiedliche lange Abschnitte der Sichtungsbahnen S1', S2' bereitgestellt wird. Das heißt, es wird beispielsweise ein Leimaerosol 15 mit einem Leimdichtegradienten zwischen den Beleimungsbereichen 12, 13 erzeugt oder mehrere Aerosole 15 mit von einander abweichender Leimdichte. Dies kann beispielsweise dadurch erzielt werden, dass, wie in der Fig. 1 links angedeutet, mehrere Sprühdüsen mit unterschiedlichen Neigungswinkeln vorgesehen sind und/oder, wie in der Fig. 1 rechts angedeutet, unterschiedlich dicht gestaffelte Sprühdüsen oder dergleichen. Ebenso wäre es möglich, aus einzelnen Zerstäubungseinrichtungen 14 unterschiedlich stark konzentrierten oder verdünnten Leim zu versprühen. Es wäre selbstverständlich auch möglich, durch geeignete Zerstäubungseinrichtungen 14 Leimaerosole 15 mit unterschiedlicher mittlerer Tropfengröße und/oder unterschiedlicher Tropfenanzahl pro Volumeneinheit zu versprühen. In jedem Fall kommen die unterschiedlich feinen Spanfraktionen S1, S2 in den Beleimungsbereichen 12, 13 entlang der Partikelflugbahnen S1', S2' jeweils mit einer an die jeweilige Spanfraktion S1, S2 angepassten Aerosolleimmenge in Kontakt.

In der Fig. 1 ist ferner im Bereich des Fallschachts 7 und der Beleimungseinrichtung 11 eine zusätzliche Blaseinrichtung 17 angedeutet. Diese umfasst im Beispiel mehrere schematisch angedeutete dezentrale Gebläse. Ebenso denkbar wäre jedoch auch wenigstens eine zentrale Gebläseeinheit mit zugeordneten Zuluftleitungen. Der Einfachheit halber nicht dargestellt sind zugeordnete Abluftleitungen. Die zusätzliche Blaseinrichtung 17 ist ausgebildet, um entlang der Seitenwände 7a des Fallschachts 7, insbesondere in einem Bereich der Aerosolbeleimung, eine schützende Luftströmung 18 zu erzeugen. Diese verhindert, dass sich das Leimaerosol 15 an den Seitenwänden 7a des Fallschachts 7 festsetzen kann. Ebenso wird verhindert, dass die Holzspäne S in Form der Spanfraktionen S1, S2 gegen den Fallschacht 7 oder andere mechanisch empfindliche Bestandteile der erfindungsgemäßen Vorrichtung 1 prallt und dort aufgrund der bekannt starken abrasiven Wirkung der Holzspäne S Schäden verursacht. Die von der zusätzlichen Blaseinrichtung 17 verursachte Schutzströmung 18 ist vorzugsweise so ausgebildet, dass ein möglichst laminarer Strömungsverlauf an der Seitenwand 7a des Fallschachts 7 resultiert, um unerwünschte Verwirbelungen und Vermischungen der zu trennenden Spanfraktionen S1, S2 aufgrund von Turbulenzen zu vermeiden.

Die erfindungsgemäße Vorrichtung 1 umfasst vorzugsweise ferner eine dritte Auffangvorrichtung 21 für von den Holzspänen S zu separierende Fremdkörper S3, wie Sand, Steine, Metallteile und dergleichen, die insbesondere schwerer sind als die Holzspäne S, sowie eine vierte Auffangvorrichtung 23 für eine nicht zu beleimende, leichte Spanfraktion S4, wie beispielsweise Holzstaub. Die dritte und die vierte Auffangvorrichtung 21, 23 sind vorzugsweise in einem Bereich der Ablenkströmung 6 stromaufwärts vor der Beleimungsvorrichtung 11 angeordnet. Somit können die Fremdkörper S3 und die leichte Spanfraktion S4 von den zu beleimenden Spanfraktionen S1, S2 in unbeleimtem Zustand getrennt und ausgesondert werden. Folglich kann beispielsweise die leichte Spanfraktion S4 einer uneingeschränkten und umweltschonenden Weiterverwertung zum Verbrennen oder dergleichen zugeführt werden. Ebenso lässt sich die Fremdkörperfraktion S3 auf besonders einfache Weise sammeln und entsorgen. Es versteht sich von selbst, dass durch diese Anordnung zusätzlich zu der vereinfachten Handhabung und der verbesserten Verwertung der ausgesonderten Fraktionen außerdem vermieden wird, dass das Leimaerosol 15 auf die nicht zu beleimenden Spanfraktionen S3, S4 gerichtet wird, so dass der Leimverbrauch insgesamt reduziert werden kann.

Wie die Fig. 1 verdeutlicht, werden die leichteren Fraktionen S2, S4 der Holzspäne S von der Luftströmung 6 seitlich weiter abgelenkt als die schwerere Spanfraktion S1 oder die Fremdkörperfraktion S3. Anders gesagt, ergeben sich für schwerere und/oder gröbere Fraktionen vergleichsweise steilere Sichtungsbahnen. Somit lassen sich die einzelnen Fraktionen S1 bis S4 vor oder in dem Fallschacht 7 durch das Einwirken der Luftströmung 6 effektiv sichten.

Es wäre selbstverständlich denkbar, die Holzspäne S noch feiner zu fraktionieren. Beispielsweise könnte zwischen mehr als zwei zu beleimenden Spanfraktionen S1, S2 unterschieden werden. Ebenso könnte eine weitere schwere Spanfraktion S5 mittels der Ablenkströmung 6 vor der Beleimung zur Rückführung in den Produktstrom ausgesondert werden. Beispielsweise könnte eine für die Herstellung von Spanplatten einer bestimmten Qualität zu grobe Spanfraktion in unbeleimtem Zustand zurückgeführt, zerkleinert und schließlich der Holzspäne S wieder beigemischt werden. Im nicht beleimten Zustand lässt sich die zurück zu führende grobe Spanfraktion besonders einfach handhaben.

Besonders günstig ist die Ablenkströmung 6, falls deren Hauptströmungsrichtung 6' mit der Horizontalen einen Winkel α im Bereich von 30 bis 60° einschließt. Idealerweise liegt der Winkel α der Hauptströmungsrichtung 6' im Bereich von 40 bis 50°. In diesem Winkelbereich lassen sich die Flugbahnen der einzelnen Spanfraktionen S1, S2, S4 besonders günstig proportionieren. Bei derartigen Winkeln α ergeben sich vergleichsweise lange Wurfparabeln mit der Folge einer besonders genauen und Platz sparenden Windsichtung. Entsprechend lassen sich die Beleimungsbereiche 12, 13 räumlich besonders gut voneinander trennen und die zugehörigen Leimdichten einstellen.

Obwohl die Beleimungsbereiche 12, 13 in der Fig. 1 mit einem Abstand zueinander gezeichnet sind, könnten die Beleimungsbereiche 12, 13 auch direkt aneinandergrenzen oder ineinander übergehen. Ebenso kann die Leimdichte in Form eines Gradienten ausgebildet sein und stufenlos von einem Beleimungsbereich 12, 13 in den anderen übergehen. Beispielsweise könnte die mit wenigstens einem Leimaerosol 15 bereitgestellte Leimmenge pro durchströmtem Volumen des jeweiligen Beleimungsbereichs 12, 13 kontinuierlich von dem der groben Spanfraktion S1 zugeordneten Beleimungsbereich 12 zu dem der feinen Spanfraktion S2 zugeordneten Beleimungsbereich 13 hin abnehmen. Entscheidend hierbei ist, dass für unterschiedlich feine Spanfraktionen S1, S2 unterschiedliche spezifische Leimmengen bereitgestellt werden können, um die jeweils aufgenommene Leimmenge an einen für die Spanfraktionen S1, S2 charakteristischen Parameter, wie das Volumen, die Abmessungen und/oder die Oberfläche der Partikel, anzupassen.

Der Vollständigkeit halber sind in der Fig. 1 eingangsseitige Dosier- und/oder Umlenkwalzen 25 angedeutet, deren Funktionsweise im Wesentlichen bekannt ist und daher nicht näher beschrieben wird. Allerdings ist eine der Blaseinrichtung 5 unmittelbar vorgelagerte Umlenkwalze 25a vorzugsweise so eingerichtet, dass die Holzspäne S seitlich in Richtung des schräg nach oben weisenden Ablenkstroms 6 weggeschleudert wird. Dadurch lässt sich eine eingangsseitige Sichtungsbahn S3', ähnlich einer Wurfparabel, für schwere Partikel zur Sichtung der Fremdkörperfraktion S3 erzeugen.

Das wenigstens eine Leimaerosol 15 wird vorzugsweise in Form eines Leimvorhangs bereitgestellt, der die Sichtungsbahnen S1', S2' kreuzt. Vorteilhaft ist hierfür eine lineare Anordnung der erfindungsgemäßen Vorrichtung 1, bei der die Strukturen der Fig. 1 im Wesentlichen als Querschnitte von in die Zeichenebene hinein ragenden Profilen zu interpretieren wären. Es ist allerdings auch eine im Wesentlichen rotationssymmetrische Ausführung der Vorrichtung 1 denkbar, wobei die Leimaerosole 15 dann einen im Wesentlichen rotationssymmetrischen Leimvorhang bilden könnten. Es ist jedoch weder eine achsensymmetrische noch eine rotationssymmetrische Bauweise der erfindungsgemäßen Vorrichtung 1 zwingend erforderlich.

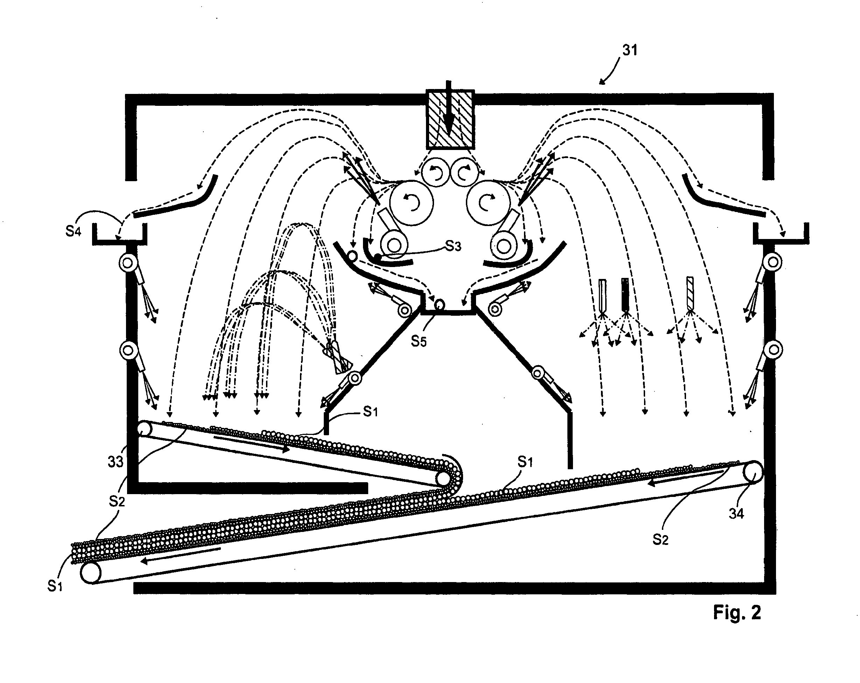

Die Fig. 2 zeigt eine alternative Ausführungsform 31 der erfindungsgemäßen Vorrichtung, die mit Ausnahme der ersten und zweiten Auffangvorrichtungen 9, 10 im Wesentlichen der ersten Ausführungsform 1 entspricht. Identische oder gleichwertige Merkmale sind in der Fig. 2 der Übersichtlichkeit halber weggelassen und/oder nicht gesondert bezeichnet. Bei der zweiten Ausführungsform 31 sind an Stelle der trichterförmigen oder ringförmigen ersten und zweiten Auffangvorrichtung 9, 10 Förderbänder 33 und 34 vorgesehen, die ebenso als Auffangvorrichtungen dienen und die beleimten und aufgefangenen Spanfraktionen S1, S2 zusätzlich als kontinuierliche Teilproduktströme übereinanderschichten, um Mehrschichtspannplatten auf besonders platzsparende Weise herzustellen. Dem gegenüber werden die mit der ersten Ausführungsform 1 aufgefangenen Spanfraktionen S1, S2 bei Bedarf vor dem Übereinanderschichten nochmals gesichtet und/oder über eine herzustellenden Plattenfläche gleichmäßig verteilt, um möglichst gleichmäßige Schichtdicken zu gewährleisten.

Mit der erfindungsgemäßen Vorrichtung 1, 31 kann wie folgt gearbeitet werden:

Für die Herstellung von Mehrschichtspannplatten geeignete Holzspäne S, die unterschiedlich grobe Bestandteile umfasst, wird als kontinuierlicher Produktstrom über die Dosierwalzen 25 in die erfindungsgemäße Vorrichtung 1, 31 eingebracht. Über die Umlenkwalzen 25a werden die Holzspäne S im Wesentlichen in waagrechter Richtung auf die Luftströmung 6 zu geschleudert, so dass enthaltene schwere Fremdkörper S3 vor der Ablenkströmung 6 herab fallen und/oder durch diese hindurch fallen, um von der dritten Auffangvorrichtung 21 aufgefangen und folglich aus dem Produktstrom ausgesondert zu werden.

Die Holzspäne S wird dagegen von der Ablenkströmung 6 schräg nach oben mitgerissen. Leichte, nicht zu beleimende feine Anteile S4 der Holzspäne S, wie beispielsweise Holzstaub, werden von der vierten Auffangvorrichtung 23 vor der Beleimung aus dem Produktsrom ausgesondert und einer separaten Verwertung zugeführt, beispielsweise der Energiegewinnung.

Demgegenüber fallen die von der Luftströmung 6 mitgerissenen, zu beleimenden Spananteile im Wesentlichen dem Verlauf einer steileren Wurfparabel S1', S2' folgend in den Fallschacht 7. Die Sichtung mit Hilfe der Luftströmung 6 bewirkt hierbei, dass die feine Spanfraktion S1 seitlich weiter ausgelenkt wird als die grobe Spanfraktion S2. Somit fallen die Spanfraktionen S1, S2 im Wesentlichen seitlich nebeneinander durch den Fallschacht 7. Im Wesentlichen durch die Flugkurven S1', S2' der Partikel der Spanfraktionen S1, S2 eingegrenzt sind die Beleimungsbereiche 12, 13 in dem Fallschacht 7, in denen vorzugsweise unterschiedliche Leimdichten mit wenigstens einem geeignet verteilten Leimaerosol 15 oder mit mehreren unterschiedlichen Leimaerosolen 15 bereitgestellt werden. Beim Fallen durch den Fallschacht 7, insbesondere in den Beleimungsbereichen 12, 13, nehmen die Spanfraktionen S1, S2 jeweils einen Teil der Leimaerosole 15 auf und werden somit beim Durchlaufen der Beleimungsbereiche 12, 13 beleimt. Die Leimdichte des wenigstens einen Leimaerosols 15 ist hierbei in den Beleimungsbereichen 12, 13 vorzugsweise an die jeweilige mittlere Spangröße der Spanfraktionen S1, S2 angepasst. Dadurch wird die Leimmenge in den feinen und groben Spanfraktionen S1, S2 an ein Verhältnis der jeweiligen mittleren Partikeloberfläche und des mittleren Partikelvolumens angepasst.

Im unteren Bereich des Fallschachts 7 werden die beleimten Spanfraktionen S1, S2 von der Auffangvorrichtung 9 getrennt gesammelt und für die Weiterverarbeitung zu einer Mehrschichtspannplatte bereitgestellt. Dabei können die Spanfraktionen S1, S2 in bekannter Weise als untere Deckschicht, Mittelschicht und obere Deckschicht übereinandergeschichtet werden. Es ist ebenso denkbar, die Spanfraktionen S1, S2 oder weitere (nicht dargestellte) Spanfraktionen zu Mehrschichtplatten mit einer vom gezeigten Anwendungsbeispiel abweichenden Anzahl von Schichten zu pressen. Mit erfindungsgemäß gesichteten und beleimten Spanfraktionen lassen sich auch bei Verwendung herkömmlicher Pressvorrichtungen Mehrschichtplatten mit verbesserter Qualität und/oder besonders ressourcenschonend herstellen.

Die gezeigten Ausführungsformen lassen sich in beliebiger, technisch sinnvoller Weise miteinander kombinieren. Insbesondere lassen sich unterschiedliche Beleimungseinrichtungen kombinieren. Es ist beispielsweise möglich, unterschiedliche Leimdichten oder Leimgradienten in den Beleimungsbereichen 12, 13 durch Kombination unterschiedlicher Zerstäubungseinrichtungen 14 oder unterschiedlich stark verdünnter Leimaerosole 15 herzustellen. Insbesondere können einzelne Zerstäubungseinrichtungen 14 unterschiedlich stark geneigt werden. Ebenso können Sprühdüsen und/oder Rotationszerstäuber unterschiedlich dicht nebeneinander angeordnet werden. Durch unterschiedliche Neigungen von Sprühdüsen lassen sich beispielsweise unterschiedlich geformte Leimvorhänge aus dem Leimaerosol 15 formen, so dass sich die Kontaktbereiche des Leimaerosols 15 mit den unterschiedlich feinen Spanfraktionen S1, S2 in den einzelnen Beleimungsbereichen 12, 13 unterscheiden. Hierbei sind in den Figuren gezeigten Varianten der Zerstäubungseinrichtungen 14 und deren asymmetrische Kombination lediglich als schematische Beispiele zur Erklärung der Funktionsweise zu verstehen.

Ebenso können die getrennten und beleimten Spanfraktionen S1, S2 auf unterschiedliche Weise gesammelt und schichtweise zu Matten ausgestreut werden, wie beispielhaft in den Figuren 1 und 2 angedeutet.

## Patentansprüche

1. Vorrichtung (1, 31) zum Windsichten und Beleimen von Holzspänen (S), umfassend:
- eine Windsichteinrichtung (3) zum Fraktionieren der Holzspäne in wenigstens eine grobe und eine feine Spanfraktion (S1, S2), wobei die Windsichteinrichtung wenigstens einen Fallschacht (7) umfasst und derart ausgebildet ist, dass die grobe und die feine Spanfraktion durch unterschiedliche Beleimungsbereiche (12, 13) im Fallschacht fallen; und
- eine Beleimungseinrichtung (11) zum Beleimen der groben und der feinen Spanfraktion in den Beleimungsbereichen.

2. Vorrichtung nach Anspruch 1, wobei die Beleimungseinrichtung (11) ausgebildet ist, in die Beleimungsbereiche (12, 13) wenigstens ein Leimaerosol (15) derart einzubringen, dass entlang wenigstens einer von der groben Spanfraktion (S1) durchlaufenen Sichtungsbahn (S1') eine andere Leimmenge bereit gestellt wird, insbesondere eine größere Leimmenge, als entlang wenigstens einer von der feinen Spanfraktion (S2) durchlaufenen Sichtungsbahn (S2').

3. Vorrichtung nach Anspruch 1 oder 2, wobei die Beleimungseinrichtung (11) ausgebildet ist, in die Beleimungsbereiche (12, 13) wenigstens ein Leimaerosol (15) derart einzubringen, dass sich eine mittlere Leimdichte in den Beleimungsbereichen voneinander unterscheidet.

4. Vorrichtung nach wenigstens einem der vorigen Ansprüche, wobei die Windsichteinrichtung (3) wenigstens eine Blaseinrichtung (5) zum Erzeugen einer schräg nach oben gerichteten Ablenkströmung (6) umfasst, deren Hauptströmungsrichtung (6') mit der Horizontalen insbesondere einen Winkel (α) von 30 bis 60° einschließt.

5. Vorrichtung nach wenigstens einem der vorigen Ansprüche, wobei an der Windsichteinrichtung (3) stromaufwärts von den Beleimungsbereichen (12, 13) eine Auffangvorrichtung (21) für Fremdkörper (S3) vorgesehen ist, deren Dichte größer ist als die Dichte der Holzspäne (S), und/oder eine Auffangvorrichtung für eine nicht zu beleimende Spanfraktion (S5), die gröber ist als die zu beleimenden Spanfraktionen (S1, S2), und/oder eine Auffangvorrichtung (23) für eine nicht zu beleimende Spanfraktion (S4), die feiner ist als die zu beleimenden Spanfraktionen (S1, S2).

6. Vorrichtung nach wenigstens einem der vorigen Ansprüche, ferner mit wenigstens einer Auffangvorrichtung (9, 10) zum getrennten Auffangen der beleimten Spanfraktionen (S1, S2).

7. Vorrichtung nach wenigstens einem der vorigen Ansprüche, ferner mit wenigstens einer weiteren Blaseinrichtung (17) zum Erzeugen einer Schutzströmung (18) entlang wenigstens einer Seitenwand (7a) des Fallschachts (7), um die beleimten Spanfraktionen (S1, S2) und/oder die Leimaerosole (15) von der Seitenwand weg zu lenken.

8. Vorrichtung nach Anspruch 6, wobei die Auffangvorrichtung wenigstens ein Förderband (33, 34) umfasst derart, dass wenigstens die grobe und die feine Spanfraktion (S1, S2) in Förderrichtung nacheinander auf das Förderband fallen und von diesem übereinander geschichtet zur Weiterverarbeitung bereitgestellt werden.

9. Verfahren zum Windsichten und Beleimen von Holzspänen, wobei die Holzspäne durch Windsichten in wenigstens zwei unterschiedlich feine Spanfraktionen getrennt werden und die Spanfraktionen beim Windsichten beleimt werden.

10. Verfahren nach Anspruch 9, wobei die Spanfraktionen mit Leimaerosolen unterschiedlicher Leimdichte beleimt werden, wobei die Spanfraktionen insbesondere mit umso größerer Leimdichte beleimt werden je gröber die Spanfraktion Ist.

11. Verfahren nach Anspruch 10, wobei die Spanfraktionen durch Zerstäuben unterschiedlich stark verdünnten Leims unterschiedlich dicht beleimt werden.

12. Verfahren nach wenigstens einem der Ansprüche 9 bis 11, wobei die Spanfraktionen durch Einleiten einer schräg nach oben gerichteten Ablenkströmung unterschiedlich weit in seitlicher Richtung abgelenkt und während einer Phase des Herabfallens, insbesondere in einem Bereich unterhalb der Ablenkströmung, beleimt werden.

13. Verfahren nach wenigstens einem der Ansprüche 9 bis 12, wobei beim Windsichten wenigstens eine weitere, nicht zu beleimende Spanfraktion vor dem Beleimen abgetrennt wird.

14. Verfahren nach wenigstens einem der Ansprüche 9 bis 13, wobei die Spanfraktionen wenigstens eine grobe Spanfraktion zur Herstellung einer Mittelschicht und eine feine Spanfraktion zur Herstellung wenigstens einer Deckschicht einer Pressspanplatte umfasst.

15. Verfahren zur Herstellung einer Pressspanplatte, mit dem Verfahren nach Anspruch 14 und einem Schritt zum Übereinanderschichten wenigstens einer unteren Deckschicht, der Mittelschicht und einer oberen Deckschicht, sowie mit einem Schritt zum Zusammenpressen der Deckschichten und der Mittelschicht.

## Claims

1. A device (1, 31) for elutriating and gluing wood chips (S), comprising:
- an elutriating device (3) for fractionating the wood chips into at least one coarse and one fine chip fraction (S1, S2), wherein the elutriating device encompasses at least one fall duct (7) and is designed in such a way that the coarse and fine chip fractions fall through different gluing regions (12, 13); and
- a gluing device (11) for gluing the coarse and fine chip fractions in the gluing regions.

2. The device according to claim 1, wherein the gluing device (11) is designed to introduce at least one aerosol glue (15) into the gluing regions (12, 13) in such a way as to provide another glue quantity along at least one elutriating path (S1') traversed by the coarse chip fraction (S1), in particular a larger glue quantity, than along at least one elutriating path (S2') traversed by the fine chip fraction (S2).

3. The device according to claim 1 or 2, wherein the gluing device (11) is designed to introduce at least one aerosol glue (15) into the gluing regions (12, 13) in such a way as to differentiate one average glue density from another in the gluing regions.

4. The device according to at least one of the preceding claims, wherein the elutriating device (3) encompasses at least one blowing device (5) for generating a deflection flow (6) upwardly directed at an inclination, whose primary flowing direction (6') includes an angle (α) with the horizontal in particular of 30 to 60°.

5. The device according to at least one of the preceding claims, wherein a catching device (21) is provided on the elutriating device (3) upstream from the gluing regions (12, 13) for foreign objects (S3) whose density is greater than the density of the wood chips (S), and/or a catching device for a chip fraction not to be glued (S5) that is coarser than the chip fractions to be glued (S1, S2), and/or a catching device (23) for a chip fraction not to be glued (S4) that is finer than the chip fractions to be glued (S1, S2).

6. The device according to at least one of the preceding claims, further with at least one catching device (9, 10) for separately catching the glued chip fractions (S1, S2).

7. The device according to at least one of the preceding claims, further with at least one additional blowing device (17) for generating a protective flow (18) along at least one side wall (7a) of the fall duct (7), so as to deflect the glued chip fractions (S1, S2) and/or the aerosol glues (15) away from the side wall.

8. The device according to claim 6, wherein the catching device encompasses at least one conveyor belt (33, 34) in such a way that at least the coarse and fine chip fraction (S1, S2) drop onto the conveying belt one after the other in the conveying direction, and are provided by the latter for further processing stacked one on top of the other.

9. A method for elutriating and gluing wood chips, wherein the wood chips are separated into at least two varyingly fine chip fractions via elutriation, and the chip fractions are glued during elutriation.

10. The method according to claim 9, wherein the chip fractions are glued with aerosol glues of varying glue density, wherein in particular the coarser the chip fraction, the higher the glue density with which the chip fraction is glued.

11. The method according to claim 10, wherein the chip fractions are glued to varying degrees by spraying with glue diluted to varying extents.

12. The method according to at least one of claims 9 to 11, wherein the chip fractions are deflected in a lateral direction to varying distances by introducing an upwardly inclined deflection flow, and are glued during a falling phase, in particular in a region below the deflection flow.

13. The method according to at least one of claims 9 to 12, wherein at least one other chip fraction not to be glued is separated out during elutriation before gluing.

14. The method according to at least one of claims 9 to 13, wherein the chip fractions encompass at least one coarse chip fraction for fabricating a middle layer, and a fine chip fraction for fabricating at least one cover layer for a pressed chip board.

15. A method for manufacturing a pressed chip board with the method according to claim 14, and a step for layering at least one lower cover layer, the middle layer and an upper cover layer, as well as with a step for pressing together the cover layers and the middle layer.

## Revendications

1. Dispositif (1, 31) de vannage et d'encollage de copeaux de bois (S), comprenant :
- un dispositif de vannage (3) pour fractionner les copeaux de bois en au moins une fraction de copeaux grossiers et une de copeaux fins (S1, S2), le dispositif de vannage (7) comprenant au moins un puits de chute (7) et étant réalisé de manière à ce que les fractions de copeaux grossiers et fins tombent dans différentes zones d'encollage (12, 13) et
- un dispositif d'encollage (11) pour encoller la fraction de copeaux grossiers et fins dans les zones d'encollage.

2. Dispositif selon la revendication 1, dans lequel le dispositif d'encollage (11) est réalisé de manière à introduire dans les zones d'encollage (12, 13) au moins un aérosol de colle (15) de manière à ce que, le long d'au moins une voie de criblage (S1') parcourue par la fraction de copeaux (S1), soit mise à disposition une autre quantité de colle, en particulier une plus grande quantité de colle que le long d'au moins une voie de criblage (S2') parcourue par la fraction de copeaux fins (S2).

3. Dispositif selon la revendication 1 ou 2, dans lequel le dispositif d'encollage (11) est réalisé de manière à introduire dans les zones d'encollage (12, 13) au moins un aérosol de colle (15) de manière à ce qu'une densité de colle médiane se différencie des autres dans les zones d'encollage.

4. Dispositif selon au moins une des revendications précédentes, dans lequel le dispositif de vannage (3) comprend au moins un dispositif de soufflage (5) pour générer un courant de déviation dirigé obliquement vers le haut (6) et dont le sens d'écoulement principal (6') décrit avec l'horizontale en particulier un angle (α) de 30 à 60°.

5. Dispositif selon au moins une des revendications précédentes, dans lequel il est prévu, au niveau du dispositif de vannage (3), en amont des zones d'encollage (12, 13), un dispositif récupérateur (21) des corps étrangers (S3) dont la densité est supérieure à la densité des copeaux de bois (S) et/ou un dispositif récupérateur pour une fraction de copeaux qui n'est pas à encoller (S5) et qui est plus grossière que les fractions de copeaux à encoller (S1, S2) et/ou un dispositif récupérateur (23) pour une fraction de copeaux qui n'est pas à encoller (S4) qui est plus fine que les fractions de copeaux à encoller (S1, S2).

6. Dispositif selon au moins une des revendications précédentes, comprenant en outre au moins un dispositif récupérateur (9, 10) pour récupérer séparément les fractions de copeaux encollées (S1, S2).

7. Dispositif selon au moins une des revendications précédentes, comportant en outre au moins un autre dispositif de soufflage (17) pour générer un courant protecteur (18) le long d'au moins une paroi latérale (7a) du puits de chute (7) afin de dévier les fractions de copeaux encollées (S1, S2) et/ou les aérosols de colle (15) de la paroi latérale.

8. Dispositif selon la revendication 6, dans lequel le dispositif récupérateur comprend au moins une bande transporteuse (33, 34) telle que les fractions de copeaux grossiers et fins (S1, S2) tombent l'une après l'autre sur la bande transporteuse dans le sens de transport et soient mises à disposition par celle-ci en couches superposées pour traitement ultérieur.

9. Procédé de vannage et d'encollage de copeaux de bois, dans lequel les copeaux de bois sont séparés en au moins deux fractions de copeaux de finesse différente et les fractions de copeaux sont encollées lors du vannage.

10. Procédé selon la revendication 9, dans lequel les fractions de copeaux sont encollées avec des aérosols de colle à densité de colle différente, les fractions de copeaux étant en particulier encollées avec une densité de colle d'autant plus forte que la fraction de copeaux est grossière.

11. Procédé selon la revendication 10, dans lequel les fractions de copeaux sont encollées avec une densité différente par atomisation de colle en dilution plus ou moins forte.

12. Procédé selon au moins une des revendications 9 à 11, dans lequel les fractions de copeaux sont déviées en introduisant un courant de déviation dirigé obliquement vers le haut dans une distance plus ou moins large dans le sens latéral et encollées pendant une phase de chute, en particulier dans une zone située sous le courant de déviation.

13. Procédé selon au moins une des revendications 9 à 12, dans lequel, lors du vannage, au moins une autre fraction de copeaux qui n'est pas à encoller est isolée avant l'encollage.

14. Procédé selon au moins une des revendications 9 à 13, dans lequel les fractions de copeaux comprennent au moins une fraction de copeaux grossiers pour réaliser une couche médiane et une fraction de copeaux fins pour réaliser au moins une couche de couverture d'un panneau de particules pressé.

15. Procédé de fabrication d'un panneau de particules pressé par le procédé selon la revendication 14 et une étape de feuilletage d'au moins une couche de couverture inférieure, de la couche médiane et d'une couche de couverture supérieure et une étape de compression des couches de couverture avec la couche médiane.
